# EUROPEAN PATENT SPECIFICATION

(11) **EP 2 824 590 B1**
(45) Date of publication and mention of the grant of the patent: **26.02.2020**
(21) Application number: 13757823.3
(22) Date of filing: 01.03.2013
(51) Int. Cl.: H04L 29/08, H04W 4/02, G06F 16/29, G06F 16/9537, G06F 16/954, G06F 16/58, H04L 12/58

(54) **CONTENT SHARING METHOD, TERMINAL, SERVER, AND SYSTEM, AND COMPUTER STORAGE MEDIUM**
VERFAHREN ZUR GEMEINSAMEN NUTZUNG VON INHALTEN, ENDGERÄT, SERVER UND SYSTEM SOWIE COMPUTERSPEICHERMEDIUM
PROCÉDÉ, TERMINAL, SERVEUR ET SYSTÈME DE PARTAGE DE CONTENU ET SUPPORT DE STOCKAGE INFORMATIQUE

(30) Priority: 08.03.2012 CN 201210059860
(43) Date of publication of application: 14.01.2015
(73) Proprietor: Tencent Technology (Shenzhen) Company Limited, Shenzhen City, Guangdong 518000 (CN)
(72) Inventor: ZHANG, Xiaolong, Shenzhen Guangdong 518000 (CN)
(74) Representative: Gunzelmann, Rainer
(86) International application number: PCT/CN2013/072046
(87) International publication number: WO 2013/131444

(56) References cited:
- WO-A1-2011/048619
- WO-A1-2012/021411
- CN-A- 101 951 552
- CN-A- 102 123 231
- CN-A- 102 195 706
- CN-A- 102 546 835
- US-A1- 2010 076 976
- WINDSON VIANA ET AL: "Towards the semantic and context-aware management of mobile multimedia", MULTIMEDIA TOOLS AND APPLICATIONS, vol. 53, no. 2, 24 March 2010 (2010-03-24) , pages 391-429, XP055105263, ISSN: 1380-7501, DOI: 10.1007/s11042-010-0502-6

## Description

### Technical Field

The present invention relates to a field of communication technology, and particularly to a method, a terminal, a server, a system and a computer storage medium for sharing contents.

### Background

With the rapid development of mobile terminal technology, more and more applications are used in a mobile terminal. For example, an application for taking photos in the mobile terminal is one kind of applications which can be used in the mobile terminal.

Nowadays, users often use applications for taking photos installed in the mobile terminal to take photos, and then manually select identifier information of one or more users from a user list in the mobile terminal, take the selected identifier information as a sharing object, and send the taken photos to the sharing object by services such as Email, Multimedia message, or MicroBlog, thereby sharing the photos with the sharing object.

The technology known in the art has at least the following problems:
The user has to manually select sharing objects.

A PCT application with an international publication number WO2012/021411A1 provides apparatus and methods for managing content, such as content captured by a mobile device.

### Summary of the Invention

In order to facilitate the user's operation and improve the interactivity between the user and the sharing object, the present invention provides a method, a terminal, a server, a system and a computer storage medium for sharing contents. The technical solution is as follows:
A method for sharing contents includes:
obtaining, by a terminal, position information of a user, and sending, by the terminal, a reporting request message carrying the position information of the user and identifier information of the user to a position server to enable the position server to obtain an object list according to the position information of the user and the identifier information of the user, in response to the user using an application adapted to obtain contents running on the terminal to obtain a content to be shared, in which the object list includes identifier information of at least one sharing object with whom the obtained content is to be shared, the at least one sharing object is another user of the application other than the user, and a distance between the user and any of the at least one sharing object is less than a predetermined distance and any of the at least one sharing object has used the application in a predetermined time period;
receiving, by the terminal, a reporting response message sent by the position server, in which the reporting response message carries the object list; and
sharing, by the terminal, the obtained content with the at least one sharing object according to the identifier information of the at least one sharing object in the object list.

A method for sharing contents includes:
receiving, by a position server, a reporting request message sent by a terminal in response to a user using an application adapted to obtain contents running on the terminal to obtain a content to be shared, in which the reporting request message carries position information of the user and identifier information of a user;
obtaining, by the position server, identifier information of at least one sharing object with whom the obtained content is to be shared according to the position information of the user and the identifier information of the user, in which the at least one sharing object is another user of the application other than the user, and a distance between the user and any of the at least one sharing object is less than a predetermined distance and any of the at least one sharing object has used the application in a predetermined time period; and
sending a reporting response message carrying the identifier information of the at least one sharing object to the terminal to enable the terminal to share the obtained content with the at least one sharing object according to the identifier information of the at least one sharing object.

A terminal includes:
a first obtaining module and a second obtaining module, adapted for obtaining position information of a user and sending a reporting request message carrying the position information of the user and identifier information of the user to a position server to enable the position server to obtain an object list according to the position information of the user and the identifier information of the user, in response to the user using an application adapted to obtain contents running on the terminal to obtain a content to be shared, in which the object list includes identifier information of at least one sharing object with whom the obtained content is to be shared, the at least one sharing object is another user of the application other than the user, and a distance between the user and any of the at least one sharing object is less than a predetermined distance and any of the at least one sharing object has used the application in a predetermined time period;
the second obtaining module, further adapted for receiving a reporting response message sent by the position server, in which the reporting response message carries the object list; and
a sharing module, adapted for sharing the obtained content with the at least one sharing object according to the identifier information of the at least one sharing object in the object list.

A position server includes:
a receiving module, adapted for receiving a reporting request message sent by a terminal in response to a user using an application adapted to obtain contents running on the terminal to obtain a content to be shared, in which the reporting request message carries position information of the user and identifier information of the user;
a third obtaining module, adapted for obtaining identifier information of at least one sharing object with whom the obtained content is to be shared according to the position information of the user and the identifier information of the user, in which at least one sharing object is another user of the application other than the user, and a distance between the user and any of the at least one sharing object is less than a predetermined distance and any of the at least one sharing object has used the application in a predetermined time period; and
a sending module, adapted for sending a reporting response message carrying the identifier information of the at least one sharing object to the terminal to enable the terminal to share the obtained content with the at least one sharing object according to the identifier information of the at least one sharing object.

A system for sharing contents includes the terminal and the position server described above.

One or more computer storage mediums include computer-executable instructions, and the computer executable instructions are adapted to perform the method for sharing contents.

In embodiments of the present invention, the distance between the user and any of the sharing object(s) is less than the predetermined distance, and both of the sharing object(s) and the user have used the application in a predetermined time period to obtain the content, thereby improving the interactivity between the user and the sharing object(s). In addition, the sharing object(s) can be automatically obtained for the user so as to facilitate the user's operation.

### Brief Description of Accompanying Drawings

Figure 1 illustrates a flow chart of a method for sharing contents according to Embodiment 1 of the present invention.
Figure 2 illustrates a flow chart of a method for sharing contents according to Embodiment 2 of the present invention.
Figure 3 is illustrates a flow chart of a method for sharing contents according to Embodiment 3 of the present invention.
Figure 4 illustrates a structure diagram of a terminal according to Embodiment 4 of the present invention.
Figure 5 illustrates a structure diagram of a position server according to Embodiment 5 of the present invention.
Figure 6 illustrates a structure diagram of a system for sharing contents according to Embodiment 6 of the present invention.

### Detailed Description

To make the object, technical solution and advantages of the present invention more apparent, the embodiments of the present invention will be further described in detail by reference to the accompanying drawings.

### Embodiment 1

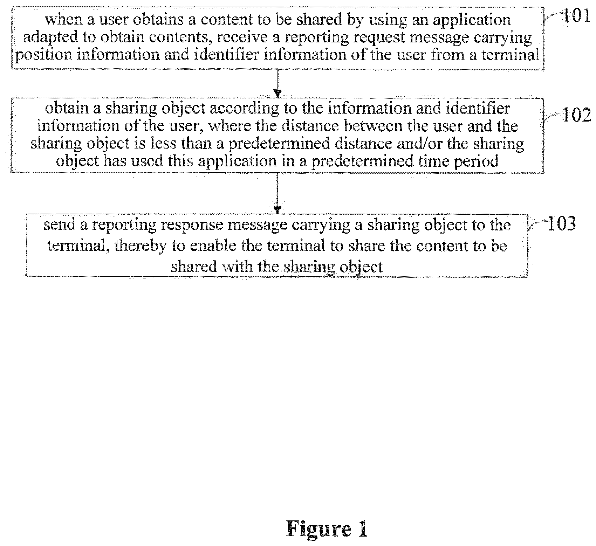

As shown in Fig.1, an embodiment of the present invention provides a method for sharing contents, which includes the following:
Step 101: when a user uses an application adapted to obtain contents to obtain a content to be shared, receiving a reporting request message which carries position information and identifier information of the user from a terminal of the user.
Step 102: obtaining sharing object(s) according to the position information and identifier information of the user, where the distance between the user and any of the sharing object(s) is less than a predetermined distance and/or any of the sharing object(s) has used this application in a predetermined time period.
Step 103: sending a reporting response message carrying a sharing object to the terminal, thereby to enable the terminal to share the content to be shared with the sharing object(s).

The executive entity in this embodiment may be a position server.

In the embodiment of the present invention, a reporting request message is received from a terminal, sharing object(s) is obtained according to the position information and identifier information of a user carried in the reporting request message, where the distance between the user and any of the sharing object(s) is less than a predetermined distance and/or any of the sharing object(s) has used this application in a predetermined time period, and a reporting response message is sent to the terminal to enable the terminal to share the content to be shared with the sharing object(s). In the embodiment, the distance between the user and any of the sharing object(s) is less than the predetermined distance, and both of the sharing object(s) and the user have used the application in a predetermined time period to obtain the content, thereby improving the interactivity between the user and the sharing object(s). In addition, the object list can be automatically obtained for the user so as to facilitate the user's operation.

### Embodiment 2

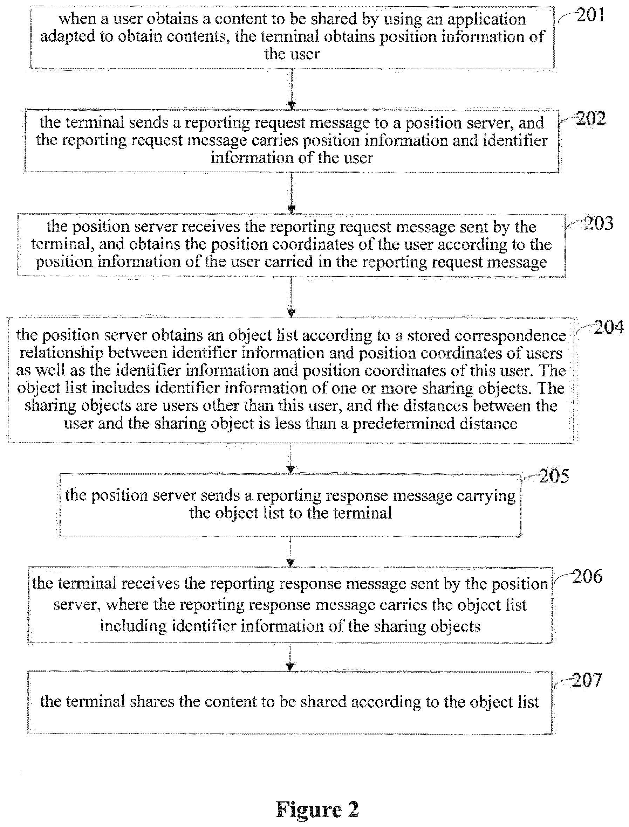

As shown in Fig.2, an embodiment of the present invention provides a method for sharing contents, which includes the followings:
Step 201: when a user uses an application adapted to obtain contents to obtain a content to be shared, a terminal obtains position information of the user.

Specifically, the terminal may obtain the position information of the user by any one of the following three methods:
In the first method, the terminal obtains position coordinates of the position where the terminal is located by using a Global Positioning System (GPS) module included in this terminal to position this terminal, and takes the position coordinates as the position information of the user.

In this method, the position coordinates may be geographic coordinates or the like.

In the second method, the terminal obtains identifier information of a base station to which the terminal accesses, and uses the identifier information of the base station to which the terminal accesses as the position information of the user.

In this method, the identifier information of the base station may be an address or a serial number of the base station.

In the third method, the terminal obtains identifier information of a wireless fidelity (wifi) network to which the terminal access, and uses the identifier information of the wifi network to which the terminal access as the position information of the user.

In this method, the wifi network is also known as a wireless broadband, and the identifier information of the wifi network may be a MAC address or the like of the wifi network.

In the above methods, the terminal includes an application adapted to obtain contents, and the user may start the application adapted to obtain the contents in the terminal, and then obtain the content to be shared by starting this application adapted to obtain the contents in the terminal.

In the above methods, the application adapted to obtain the contents may be an application for taking photos, MicoBlog or the like in the terminal, and the content to be shared may be picture(s) or text(s).

For example, in this embodiment, an application for taking photos is taken as example, but the present invention is not limited thereto. When the content to be shared by the user are picture(s), the user can starts the application adapted to take photos in the terminal to obtain the picture(s) to be shared, then the terminal positions itself by using a GPS module included therein to obtain its position coordinates (3, 3) and takes its position coordinates (3, 3) as the position information of the user.

Step 202: the terminal sends a reporting request message to a position server, and the reporting request message carries the position information and identifier information of the user.

In this step, the identifier information of the user may be presorted in the terminal, thus the terminal may directly obtain the stored identifier information of the user, or the terminal may directly receive the identifier information of the user input by the user, and then, the terminal sends the reporting request message carrying the position information and the identifier information of the user.

For example, the terminal sends the reporting request message to the position server, and the reporting request message carries the position information (3, 3) and the identifier information ID1 of the user.

Step 203: the position server receives the reporting request message sent by the terminal, and obtains the position coordinates of the user according to the position information of the user carried in the reporting request message.

Specifically, if the position information of the user carried in the reporting request message is the position coordinates of the terminal, the position server determines that the position coordinates of the terminal carried in the reporting request message is the position coordinates of the user.

If the position information of the user carried in the reporting request message is the identifier information of the base station to which the terminal accesses, the position server obtains the position coordinates of the base station to which the terminal accesses from a correspondence relationship between stored identifier information and position coordinates of base stations according to the identifier information of the base station to which the terminal accesses, and takes the position coordinates of the base station to which the terminal accesses as the position coordinates of the user.

If the position information of the user carried in the reporting request message is the identifier information of the wifi network to which the terminal access, the position server obtains the position coordinates of the wifi network to which the terminal access from a a correspondence relationship between stored identifier information and the position coordinates of wifi networks according to the identifier information of the wifi network to which the terminal accesses, and takes the position coordinates of the wifi network to which the terminal access as the position coordinates of the user.

For example, the position server receives the reporting request message sent by the terminal, and the reporting request message carries the position information (3, 3) and the identifier information ID1 of the user. Since the position information of the user is the position coordinates of the terminal, it is determined that the position coordinates of the user is (3, 3).

Step 204: the position server obtains an object list according to a stored correspondence relationship between identify information and the position coordinates of users as well as the identify information of this user and the position coordinates of this user. The object list includes identifier information of one or more sharing objects. The sharing object(s) are user(s) other than this user, and the distance between this user and any of the sharing object(s) is less than a predetermined distance.

Specifically, the position server determines a region by taking a point corresponding to the position coordinates of the user as a center and taking a predetermined distance as a radius, and obtains the identifier information of the user(s) in this region from the stored correspondence relationship between the identifier information and the position coordinates of users. If the identifier information of the user(s) in this region includes the identifier information of this user, the identifier information of this user is removed from the identifier information of the user(s) in this region, and the remaining identifier information of the user(s) in this region is taken as the identifier information of the sharing object(s). If the identifier information of the user(s) in this region does not include the identifier information of this user, the identifier information of the user(s) in this region is taken as the identifier information of the sharing object(s). The object list is formed by the identifier information of the sharing object(s).

Or, the following is performed. According to the position coordinates of the user and the correspondence relationship of the stored identifier information and position coordinates of users, the position server calculates the distance between this user and each of the users indicated in the correspondence relationship of the stored identifier information and position coordinates of the users, and obtains identifier information of the user(s) the distance between which and this user is less than a predetermined distance. If the identifier information of the user(s) in this region includes the identifier information of this user, the identifier information of this user is removed from the identifier information of the user(s) in this region, and the remaining identifier information of the user(s) in this region is taken as the identifier information of the sharing object(s). If the identifier information of the user(s) in this region does not include the identifier information of this user, the identifier information of the user(s) in this region is taken as the identifier information of the sharing object(s). The object list is formed by the identifier information of the sharing object(s).

Further, usage time when the sharing object(s) in the object list uses the application adapted to obtain contents lately is obtained, and identifier information of the sharing object(s) in the object list that has not used the application adapted to obtain the contents for a predetermined time period is removed according to the usage time. In such a way, the object list only includes the sharing object(s) that has used the application adapted to obtain the contents within the predetermined time period.

Specifically, the usage time when the sharing object(s) in the object list uses the application adapted to obtain contents lately is obtain according to a correspondence relationship between the stored identifier information and the usage time of users, and identifier information of the sharing object(s) in the object list that has not used the application adapted to obtain the contents for a predetermined time period is removed according to the usage time.

Further, a correspondence relationship between the identifier information and position coordinates of the user is established. Specifically, look up the stored correspondence relationship between the identifier information and position coordinates of users according to the identifier information of the user. If the position coordinates corresponding to the identifier information of the user are found, the found position coordinates are updated to the latest position coordinates of the user. If the position coordinates corresponding to the identifier information of the user are not found, the correspondence between the identifier information and the position coordinates of the user is taken as a record recorded in the correspondence relationship between the identifier information and position coordinates of users.

Further, the usage time when the user uses the application adapted to obtain contents lately is obtained, and a correspondence relationship between the identifier information of the user and the usage time thereof is established. Specifically, determine the current time as the usage time when the user uses the application adapted to obtain contents lately, and look up the correspondence relationship between the identifier information and the usage time of users according to the identifier information of the user. If the usage time corresponding to the identifier information of the user is found, the found usage time is updated to the latest usage time when the user uses the application. If the usage time corresponding to the identifier information of the user is not found, the correspondence relationship between the identifier information and the usage time of the user is taken as a record recorded in the correspondence relationship between the identifier information and usage time of users.

Further, a friend list of this user is obtained, where the friend list includes identifier information of user(s) who has a friend relationship with this user, and the identifier information of the user(s) who do not have a friend relationship with this user is removed from the object list according to the friend list of this user.

Specifically, the friend list of this user is obtained from a stored correspondence relationship between the identifier information and the friend lists of users according to the identifier information of this user, and the identifier information of the user(s) who do not have a friend relationship with this user is removed from the object list according to the identifier information of user(s) who has a friend relationship with this user in the friend list.

For example, in this embodiment, the position server includes a correspondence relationship between the identifier information and the position coordinates of users as shown in Table 1, and a correspondence relationship between the identifier information of and the usage time of users as shown in Table 2. The usage time of each user included in the correspondence relationship between the identifier information and the usage time of users shown in Table 2 is the time when each user uses the application adapted to take photos lately, i.e. the time when each user takes photos lately.

**Table 1**

| Identifier information of users | position coordinates |
|---|---|
| ID1 | (2, 2) |
| ID2 | (2, 3) |
| ID3 | (4, 4) |
| ID4 | (3, 4) |
| ID5 | (8, 8) |
| ..... | ..... |

**Table 2**

| Identifier information of users | Usage time |
|---|---|
| ID1 | Time1 |
| ID2 | Time2 |
| ID3 | Time3 |
| ID4 | Time4 |
| ID5 | Time5 |
| ...... | ...... |

The position server determines a region by taking a point with the position coordinates (3, 3) of the user as a center and taking a predetermined distance 3 as a radius, obtains the identifier information ID1, ID2, ID3 and ID4 of the users in this region from the stored correspondence relationship between the identifier information and the position coordinates of users as shown in Table 1, removes the identifier information ID1 of this user from the obtained identifier information ID1, ID2, ID3 and ID4 of the users, takes the remaining identifier information ID2, ID3 and ID4 of the users as the identifier information of the sharing objects, and forms an object list. According to the identifier information ID2, ID3 and ID4 of the sharing objects included in the object list, the position server finds from the correspondence relationship between the identifier information and the usage time of users shown in Table 2 that the usage time when the sharing object corresponding to the identifier information ID2 lately uses the application adapted to take photos is Time 2, the usage time when the sharing object corresponding to the identifier information ID3 lately uses the application adapted to take photos is Time 3, and the usage time when the sharing object corresponding to the identifier information ID4 lately uses the application adapted to take photos is Time 4. The time interval between the current time and any of Time 2 and Time 3 is less than a predetermined time, and the time interval between Time 4 and the current time is greater than the predetermined time. Therefore, the sharing object corresponding to the identifier information ID2 and the sharing object corresponding to the identifier information ID3 have used the application adapted to take photos within the predetermined time, while the sharing object corresponding to the identifier information ID4 has not used application adapted to take photos within the predetermined time. Thus, according to the usage time, the identifier information ID4 corresponding to the sharing object which has not used the application adapted to take photos within the predetermined time is removed from the object list. As a result, the final object list includes the identifier information ID2 and ID3 of the sharing objects.

The position server finds from the correspondence relationship between the identifier information and the position coordinates of users shown in Table 1 according to the identifier information ID1 of this user that the position coordinates corresponding to the identifier information ID1 is (2, 2), updates the position coordinates (2, 2) found in Table 1 to the latest position coordinates (3, 3) of this user, and obtains the correspondence relationship between the identifier information and the position coordinate of users as shown in Table 3.

**Table 3**

| Identifier information of users | position coordinates |
|---|---|
| ID1 | (3, 3) |
| ID2 | (2, 3) |
| ID3 | (4, 4) |
| ID4 | (3, 4) |
| ID5 | (8, 8) |
| ..... | ...... |

Further, the position server determines the current time Time 0 as the usage time when this user uses the application adapted to take photos lately, finds out from the correspondence relationship between the identifier information usage time of users shown in Table 2 according to the identifier information ID1 of this user that the usage time corresponding to the identifier information ID1 is Time 1, updates the usage time Time 1 found in Table 2 to the latest usage time Time 0 of this user, and obtains the correspondence relationship between the identifier information and the usage time of users as shown in Table 4.

**Table 4**

| Identifier information of users | Usage time |
|---|---|
| ID1 | Time0 |
| ID2 | Time2 |
| ID3 | Time3 |
| ID4 | Time4 |
| ID5 | Time5 |
| ..... | ...... |

Step 205: the position server sends a reporting response message to the terminal, and the reporting response message carries the object list.

Step 206: the terminal receives the reporting response message sent by the position server, where the reporting response message carries the object list and the object list includes identifier information of the sharing object(s).

In a process that the terminal uses the application adapted to obtain contents in order to obtain a content to be shared, the terminal may periodically perform the above Steps 202 to 206.

For example, the position server sends a reporting response message to the terminal, the terminal receives this reporting response message, where the reporting response message carries an object list which includes the identifier information ID2 and ID3of the sharing objects.

After the terminal obtains the content to be shared, the following Step 207 may be performed.

Step 207: the terminal shares the content to be shared according to the object list.

Specifically, the terminal displays the object list including the identifier information of the sharing object(s) to this user. If this user selects identifier information of a sharing object to be deleted from the object list, the terminal deletes from the object list the identifier information of the sharing objects selected by the user, and if this user needs to add identifier information of a new sharing object into the object list, the terminal obtains the identifier information of the new sharing object to be added and adds the identifier information of the new sharing object to be added into the object list. The terminal shares the content to be shared with the corresponding user(s) according to the identifier information of the user(s) included in the object list.

The terminal includes a user list which includes identifier information of one or more users, and the user may select identifier information of one or more users from the user list and take the selected identifier information as the identifier information of the new sharing object to be added. Correspondingly, the terminal may obtains from the user list the identifier information of the new sharing object to be added selected by the user.

In above procedure, the user may issue a sharing command to the terminal, and when the terminal receives the sharing command issued by the user, the terminal shares the content to be shared with the corresponding sharing object(s) according to the identifier information of the sharing object(s) included in the object list.

The operation that the terminal shares the content to be shared may specifically include any of the following methods:
In the first method, the terminal sends the content to be shared to the sharing object(s) corresponding to the identifier information of the sharing object(s) included in the object list, thereby sharing the content to be shared.

In the second method, the terminal sends the content to be shared and the object list to a sharing server, the sharing server stores the content to be shared and allocates link information for the content to be shared, sends the link information for the content to be shared to the sharing object(s) corresponding to the identifier information of the sharing object(s) included in the object list, thereby sharing the content to be shared.

In the above second method, when any of the sharing object(s) receives the link information for the content to be shared, the sharing object may obtain the content to be shared from the sharing server according to the link information for the content to be shared.

For example, supposing that the user neither needs to add identifier information of any new sharing object into the object list, nor needs to delete identifier information of any sharing object from the object list, when the terminal obtains a picture to be shared and receives a sharing command issued by this user, the terminal shares the picture to be shared according to the identifier information ID2 and ID3 of the sharing objects included in the object list.

In this embodiment of the present invention, the terminal obtains position information of this user, sends a reporting request message carrying the position information and identifier information of this user to a position server, and the position server obtains a object list according to the position information and identifier information of this user carried in the reporting request message. The object list includes sharing object(s), where the sharing object(s) are the user(s) other than this user, and the distance between the user and any of the sharing object(s) is less than a predetermined distance and/or any of the sharing object(s) has used this application in a predetermined time period. The position server sends a reporting response message carrying the object list to the terminal to enable the terminal to share the content to be shared according to the object list. In this embodiment, the distance between the user and the sharing object is less than the predetermined distance, and both of the sharing object and the user have used this application in a predetermined time period to obtain the contents, thereby improving the interactivity between the user and the sharing object. In addition, the object list may be automatically obtained for the user in order to facilitate the user's operation.

### Embodiment 3

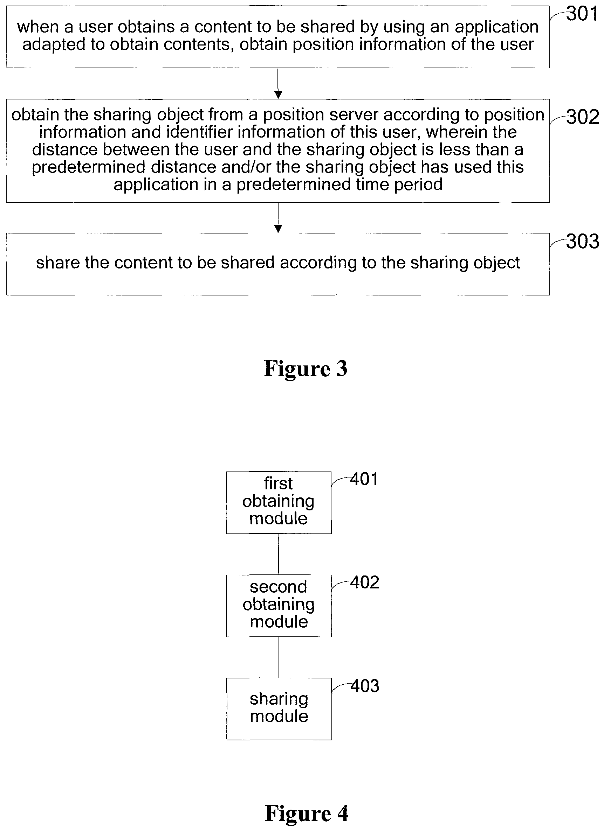

As shown in Fig.3, an embodiment of the present invention provides a method for sharing contents, which includes the followings:
Step 301: when a user uses an application adapted to obtain contents to obtain a content to be shared, position information of the user is obtained.
Step 302: the sharing object(s) is obtained from a position server according to the position information and identifier information of this user, where the distance between the user and any of the sharing object(s) is less than a predetermined distance and/or any of the sharing object(s) has used this application in a predetermined time period.
Step 303: the content to be shared is shared according to the sharing object.

The executive entity in this embodiment may be a terminal.

In the embodiment of the present invention, the terminal obtains the position information of the user, and obtains object(s) from the position server according to the position information and identifier information of a user, where the distance between the user and any of the sharing object(s) is less than a predetermined distance and/or any of the sharing object(s) has used this application in a predetermined time period, and the terminal shares the content to be shared according to the sharing object(s). In the embodiment, the distance between the user and any of the sharing object(s) is less than the predetermined distance, and both of the sharing object(s) and the user have used the application in a predetermined time period to obtain the content, thereby improving the interactivity between the user and the sharing object(s). In addition, the object list can be automatically obtained for the user so as to facilitate the user's operation.

### Embodiment 4

As shown in Fig.4, an embodiment of the present invention provides a terminal, which includes the followings:
A first obtaining module 401, adapted for obtaining position information of a user when the user uses an application adapted to obtain contents to obtain a content to be shared;
A second obtaining module 402, adapted for obtaining the sharing object(s) from a position server according to the position information and identifier information of this user, wherein the distance between the user and any of the sharing object(s) is less than a predetermined distance and/or any of the sharing object(s) has used this application in a predetermined time period; and
A sharing module 403, adapted for sharing the content to be shared according to the sharing object (s).

The first obtaining module 401 includes one of the following units:
A positioning unit, adapted for positioning the terminal by using a GPS module included in the terminal to obtain the position coordinates of the terminal, and taking the position coordinates of the terminal as the position information of this user;
A first obtaining unit, adapted for obtaining identifier information of a base station to which the terminal accesses, and taking the identifier information of the base station as the position information of this user; and
A second obtaining unit, adapted for obtaining identifier information of a wifi network to which the terminal accesses, and taking the identifier information of the wifi network as the position information of this user.

The second obtaining module 402 includes the followings:
A sending unit, adapted for sending a reporting request message carrying the position information and the identifier information of the user to the position server to enable the position server to obtain an object list according to the position information and the identifier information of the user, wherein the object list includes identifier information of the sharing object(s); and
A receiving unit, adapted for receiving the reporting response message sent by the position server, wherein the reporting response message carries the object list.

The sharing module 403 includes the followings:
A display unit, adapted for displaying the identifier information of the sharing object(s) included in the object list to the user;
A deleting unit, adapted for deleting the identifier information of a sharing object selected by this user from the object list on the condition that this user selects from the object list the identifier information of the sharing object to be deleted;
An adding unit, adapted for obtaining identifier information of a new sharing object and adding the identifier information of the new sharing object into the object list on the condition that this user wants to add the new sharing object into the object list; and
A sharing unit, adapted for sharing the content to be shared with the sharing object(s) according to the identifier information of the sharing object(s) included in the object list.

In the embodiment of the present invention, a reporting request message is received from a terminal, sharing object(s) is obtained according to the position information and identifier information of a user carried in the reporting request message, where the distance between the user and any of the sharing object(s) is less than a predetermined distance and/or any of the sharing object(s) has used this application in a predetermined time period, and a reporting response message is sent to the terminal to enable the terminal to share the content to be shared with the sharing object(s). In the embodiment, the distance between the user and any of the sharing object(s) is less than the predetermined distance, and both of the sharing object(s) and the user have used the application in a predetermined time period to obtain the content, thereby improving the interactivity between the user and the sharing object(s). In addition, the object list can be automatically obtained for the user so as to facilitate the user's operation.

### Embodiment 5

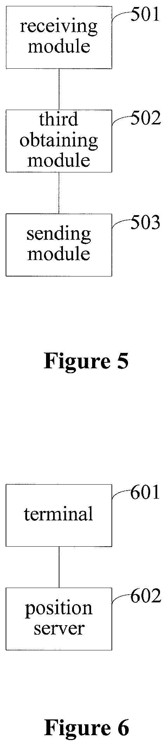

As shown in Fig.5, an embodiment of the present invention provides a position server, which includes the followings:
A receiving module 501, adapted for receiving a reporting request message sent by a terminal when a user uses an application adapted to obtain contents to obtain a content to be shared, where the reporting request message carries position information and identifier information of the user;
A third obtaining module 502, adapted for obtaining the sharing object(s) according to the position information and identifier information of the user, wherein the distance between the user and any of the sharing object(s) is less than a predetermined distance and/or any of the sharing object(s) has used this application in a predetermined time period; and
A sending module 503, adapted for sending a reporting response message carrying the sharing object(s) to the terminal to enable the terminal to share the content to be shared according to the sharing object(s).

The third obtaining module 502 includes the followings:
A third obtaining unit, adapted for obtaining position coordinates of the user according to the position information of the user; and
A fourth module unit, adapted for obtaining the object list according to a stored correspondence relationship between the identifier information and position coordinates of users as well as the identifier information and position coordinates of this user, where the object list includes the identifier information of the sharing object(s) and the distance between any of the sharing object(s) and this user is less than a predetermined distance.

The third obtaining unit includes the followings:
A determining subunit, adapted for taking the position coordinates of the terminal as the position coordinates of the user on the condition that the position information of the user is the position coordinates of the terminal;
A first obtaining subunit, adapted for, one the condition that the position information of the user is identifier information of a base station, obtaining position coordinates of the base station from a stored correspondence relationship between the identifier information and the position coordinates of base stations according to identifier information of this base station, and taking the position coordinates of this base station as the position coordinates of this user; and
A second obtaining subunit, adapted for, on the condition that the position information of the user is identifier information of a wifi network, obtaining according to identifier information of the wifi network, position coordinates of the wifi network from a stored correspondence relationship between the identifier information and the position coordinates of wifi networks, and taking the position coordinates of the wifi network as the position coordinates of this user.
The third obtaining module 502 may further include a removing unit, adapted for obtaining usage time when the sharing object(s) included in the object list lately uses the application, and removing, according to the usage time, the identifier information of sharing object(s) which has not used the application within a predetermine time period from the object list.

Further, the server may further include an establishment unit, adapted for establishing a correspondence relationship between the identifier information and the position coordinates of the user.

In the embodiment of the present invention, a reporting request message is received from a terminal, sharing object(s) is obtained according to the position information and identifier information of a user carried in the reporting request message, where the distance between the user and any of the sharing object(s) is less than a predetermined distance and/or any of the sharing object(s) has used this application in a predetermined time period, and a reporting response message is sent to the terminal to enable the terminal to share the content to be shared with the sharing object(s). In the embodiment, the distance between the user and any of the sharing object(s) is less than the predetermined distance, and both of the sharing object(s) and the user have used the application in a predetermined time period to obtain the content, thereby improving the interactivity between the user and the sharing object(s). In addition, the object list can be automatically obtained for the user so as to facilitate the user's operation.

### Embodiment 6

As shown in Fig.6, an embodiment of the present invention provides a system for sharing contents, which include a terminal 601 as described in Embodiment 4 and a position server 602 as described in Embodiment 5.

Those skilled in the art should be understand that all or a part of the above embodiments may be completed by using hardware, or be implemented by using a program which send instructions to the hardware to complete these embodiments. The program may be stored in a computer-readable storage medium, and the flow chart of the embodiments as described in the above various methods may be performed when the program is executed. The above mentioned storage medium may be Read-Only Memory (ROM), magnetic disc, optical disc, Random Access Memory (RAM) or the like.

The forgoing is only preferred embodiments of the present invention, and is not intended to limit the present invention, as defined by the appended claims.

## Claims

1. A method for sharing contents, said method comprising:
obtaining (201, 301), by a terminal, position information of a user of the terminal, and sending (202), by the terminal, a reporting request message carrying the position information of the user and identifier information of the user to a position server to enable the position server to obtain an object list according to the position information of the user and the identifier information of the user, in response to the user using an application adapted to obtain contents running on the terminal to obtain a content to be shared, wherein the object list comprises identifier information of at least one sharing object with whom the obtained content is to be shared, the at least one sharing object is another user of the application other than the user, and a distance between the user and any of the at least one sharing object is less than a predetermined distance and any of the at least one sharing object has used the application in a predetermined time period;
receiving (206), by the terminal, a reporting response message sent by the position server, wherein the reporting response message carries the object list; and
sharing (207, 303), by the terminal, the obtained content with the at least one sharing object according to the identifier information of the at least one sharing object in the object list.

2. The method for sharing contents according to claim 1, wherein obtaining (201, 301), by the terminal, the position information of the user comprises:
positioning, by the terminal, the terminal by using a GPS module in the terminal to obtain position coordinates of the terminal, and taking, by the terminal, the position coordinates of the terminal as the position information of the user; or
obtaining, by the terminal, identifier information of a base station to which the terminal accesses, and taking, by the terminal, the identifier information of the base station as the position information of the user; or
obtaining, by the terminal, identifier information of a wifi network to which the terminal accesses, and taking, by the terminal, the identifier information of the wifi network as the position information of this user.

3. The method for sharing contents according to claim 1, wherein sharing (207, 303), by the terminal, the obtained content with the at least one sharing object comprises:
displaying, by the terminal, the identifier information of the at least one sharing object comprised in the object list to the user;
in response to the user selecting identifier information of a sharing object to be deleted from the object list, deleting, by the terminal, the identifier information of the sharing object selected;
in response to the user selecting identifier information of a new sharing object from a user list stored on the terminal, obtaining, by the terminal, the identifier information of the new sharing object and adding, by the terminal, the identifier information of the new sharing object into the object list; and
sharing, by the terminal, the obtained content with the at least one sharing object according to the identifier information of the at least one sharing object comprised in the object list.

4. A method for sharing contents, said method comprising:
receiving (101, 203), by a position server, a reporting request message sent by a terminal in response to a user using an application adapted to obtain contents running on the terminal to obtain a content to be shared, wherein the reporting request message carries position information of the user and identifier information of the user;
obtaining (102, 204), by the position server, identifier information of at least one sharing object with whom the obtained content is to be shared according to the position information of the user and the identifier information of the user, wherein the at least one sharing object is another user of the application other than the user, and a distance between the user and any of the at least one sharing object is less than a predetermined distance and any of the at least one sharing object has used the application in a predetermined time period; and
sending (103) a reporting response message carrying the identifier information of the at least one sharing object to the terminal to enable the terminal to share the obtained content with the at least one sharing object according to the identifier information of the at least one sharing object.

5. The method for sharing contents according to claim 4, wherein obtaining, by the position server, the identifier information of the at least one sharing object according to the position information of the user and the identifier information of the user comprises:
obtaining, by the position server, position coordinates of the user according to the position information of the user; and
obtaining, by the position server, an object list according to the identifier information of the user and the position coordinates of the user as well as a stored correspondence relationship between identifier information and position coordinates of users, wherein the object list comprises identifier information of at least one sharing object and the distance between any of the at least one sharing object and the user is less than a predetermined distance.

6. The method for sharing contents according to claim 5, wherein obtaining (102, 204), by the position server, the position coordinates of the user according to the position information of the user comprises:
taking, by the position server, position coordinates of the terminal obtained via a GPS module as the position coordinates of the user on the condition that the position information of the user is the position coordinates of the terminal;
on the condition that the position information of the user is identifier information of a base station to which the terminal accesses, obtaining, by the position server, position coordinates of the base station corresponding to the identifier information of the base station according to a stored correspondence relationship between identifier information and position coordinates of base stations, and taking, by the position server, the obtained position coordinates of the base station as the position coordinates of the user; and
on the condition that the position information of the user is identifier information of a wifi network to which the terminal accesses, obtaining, by the position server, position coordinates of the wifi network corresponding to the identifier information of the wifi network according to a stored correspondence relationship between identifier information and position coordinates of wifi networks, and taking, by the position server, the obtained position coordinates of the wifi network as the position coordinates of the user.

7. The method for sharing contents according to claim 5, wherein, after obtaining the object list according to the identifier information of the user and the position coordinates of the user as well as the stored correspondence relationship between the identifier information of the user and the position coordinates of users, the method further comprises:
for each of the at least one sharing object in the object list, obtaining, by the position server, usage time of the sharing object when the sharing object in the object list lately uses the application; and
on the condition that it is determined according to the obtained usage time of the at least one sharing object that there is a sharing object which has not used the application within a predetermine time period, removing, by the position server, identifier information of the sharing object which has not used the application within a predetermine time period from the object list.

8. A terminal comprising:
a first obtaining module (401) and a second obtaining module (402), adapted for obtaining position information of a user of the terminal and sending a reporting request message carrying the position information of the user and identifier information of the user to a position server to enable the position server to obtain an object list according to the position information of the user and the identifier information of the user, in response to the user using an application adapted to obtain contents running on the terminal to obtain a content to be shared, wherein the object list comprises identifier information of at least one sharing object with whom the obtained content is to be shared, the at least one sharing object is another user of the application other than the user, and a distance between the user and any of the at least one sharing object is less than a predetermined distance and any of the at least one sharing object has used the application in a predetermined time period;
the second obtaining module (402), further adapted for receiving a reporting response message sent by the position server, wherein the reporting response message carries the object list; and
a sharing module (403), adapted for sharing the obtained content with the at least one sharing object according to the identifier information of the at least one sharing object in the object list.

9. The terminal according to claim 8, wherein the first obtaining module comprises:
a positioning unit, adapted for positioning the terminal by using a GPS module in the terminal to obtain position coordinates of the terminal, and taking the position coordinates of the terminal as the position information of the user; or
a first obtaining unit, adapted for obtaining identifier information of a base station to which the terminal accesses, and taking the identifier information of the base station as the position information of the user; or
a second obtaining unit, adapted for obtaining identifier information of a wifi network to which the terminal accesses, and taking the identifier information of the wifi network as the position information of the user.

10. A position server comprising:
a receiving module (501), adapted for receiving a reporting request message sent by a terminal in response to a user using an application adapted to obtain contents running on the terminal to obtain a content to be shared, wherein the reporting request message carries position information of the user and identifier information of the user;
a third obtaining module (502), adapted for obtaining identifier information of at least one sharing object with whom the obtained content is to be shared according to the position information of the user and the identifier information of the user, wherein at least one sharing object is another user of the application other than the user, and a distance between the user and any of the at least one sharing object is less than a predetermined distance and any of the at least one sharing object has used the application in a predetermined time period; and
a sending module (503), adapted for sending a reporting response message carrying the identifier information of the at least one sharing object to the terminal to enable the terminal to share the obtained content with the at least one sharing object according to the identifier information of the at least one sharing object.

11. The position server according to claim 10, wherein the third obtaining module comprises:
a third obtaining unit, adapted for obtaining position coordinates of the user according to the position information of the user; and
a fourth module unit, adapted for obtaining an object list according to the identifier information of the user and the position coordinates of the user as well as a stored correspondence relationship between identifier information and position coordinates of users, wherein the object list comprises identifier information of at least one sharing object and the distance between any of the at least one sharing object and the user is less than a predetermined distance.

12. A system for sharing contents, wherein the system comprises the terminal according to any of claims 8 to 9 and the position server according to any of claims 10 to 11.

13. One or more computer storage media comprising computer-executable instructions which, when executed by a computer, cause the computer to perform a method for sharing contents according to any of claims 1-7.

## Patentansprüche

1. Verfahren zum Teilen von Inhalten, wobei das Verfahren umfasst:
Erhalten (201, 301) von Positionsinformation eines Benutzers eines Terminals durch das Terminal und Senden (202) einer Meldeanforderungsnachricht, die die Positionsinformation des Benutzers und die Identifikationsinformation des Benutzers an einen Positionsserver trägt, um es dem Positionsserver zu ermöglichen, eine Objektliste gemäß der Positionsinformation des Benutzers und der Identifikationsinformation des Benutzers als Reaktion auf den Benutzer zu erhalten, der eine Anwendung verwendet, die angepasst ist, um auf dem Terminal laufende Inhalte zu erhalten, um einen zu teilenden Inhalt zu erhalten, wobei die Objektliste Identifikationsinformation von mindestens einem geteilten Objekt umfasst, mit dem der erhaltene Inhalt geteilt werden soll, das mindestens eine geteilte Objekt ein anderer Benutzer der Anwendung ist, der nicht der Benutzer ist, und ein Abstand zwischen dem Benutzer und einem der mindestens einen geteilten Objekte kleiner als ein vorbestimmter Abstand ist und jedes der mindestens einen geteilten Objekte die Anwendung in einem vorbestimmten Zeitraum verwendet hat;
Empfangen (206) einer vom Positionsserver gesendeten Berichtsantwortnachricht durch das Terminal, wobei die Berichtsantwortnachricht die Objektliste trägt; und
Teilen (207, 303) des erhaltenen Inhalts mit dem mindestens einen geteilten Objekt durch das Terminal gemäß der Identifikationsinformation des mindestens einen geteilten Objekts in der Objektliste.

2. Verfahren zum Teilen von Inhalten nach Anspruch 1, wobei
Erhalten (201, 301) der Positionsinformation des Benutzers durch das Terminal, umfasst:
Positionsbestimmung des Terminals durch das Terminal unter Verwendung eines GPS-Moduls im Terminal, um Positionskoordinaten des Terminals zu erhalten, und Aufnahme der Positionskoordinaten des Terminals als Positionsinformation des Benutzers durch das Terminal; oder
Erhalten von Identifikationsinformation einer Basisstation, auf die das Terminal zugreift, durch das Terminal und Empfangen der Identifikationsinformation der Basisstation als Positionsinformation des Benutzers durch das Terminal; oder
Erhalten von Identifikationsinformation eines WLAN-Netzwerks, auf das das Terminal zugreift, durch das Terminal und Empfangen der Identifikationsinformation des WLAN-Netzwerks als Positionsinformation dieses Benutzers durch das Terminal.

3. Verfahren zum Teilen von Inhalten nach Anspruch 1, wobei
Teilen (207, 303) durch das Terminal, wobei der erhaltene Inhalt mit dem mindestens einen geteilten Objekt umfasst:
Anzeigen der Identifikationsinformation des mindestens einen geteilten Objekts, das in der Objektliste enthalten ist, durch das Terminal für den Benutzer;
als Reaktion darauf, dass der Benutzer Identifikationsinformation eines zu löschenden Freigabeobjekts aus der Objektliste auswählt und die Identifikationsinformation des ausgewählten Freigabeobjekts durch das Terminal löscht;
als Reaktion auf das Auswählen von Identifikationsinformation eines neuen geteilten Objekts durch den Benutzer aus einer auf dem Terminal gespeicherten Benutzerliste, Erhalten der Identifikationsinformation des neuen geteilten Objekts durch das Terminal und Hinzufügen der Identifikationsinformation des neuen geteilten Objekts durch das Terminal in die Objektliste; und
Teilen des erhaltenen Inhalts mit dem mindestens einen geteilten Objekt durch das Terminal gemäß der Identifikationsinformation des mindestens einen geteilten Objekts, das in der Objektliste enthalten ist.

4. Verfahren zum Teilen von Inhalten, wobei das Verfahren umfasst:
Empfangen (101, 203) einer Berichtsanforderungsnachricht, die von einem Terminal als Reaktion auf einen Benutzer unter Verwendung einer Anwendung gesendet wird, die angepasst ist, um Inhalte zu erhalten, die auf dem Terminal ausgeführt werden, um einen zu teilenden Inhalt zu erhalten, durch einen Positionsserver, wobei die Berichtsanforderungsnachricht Positionsinformation des Benutzers und Identifikationsinformation des Benutzers trägt;
Erhalten (102, 204) von Identifikationsinformation von mindestens einem geteilten Objekt, mit dem der erhaltene Inhalt gemäß der Positionsinformation des Benutzers und der Identifikationsinformation des Benutzers geteilt werden soll, wobei das mindestens eine geteilte Objekt ein anderer Benutzer der Anwendung ist, der nicht der Benutzer ist, und eine Entfernung zwischen dem Benutzer und einem der mindestens einen geteilten Objekte kleiner als eine vorbestimmte Entfernung ist und jedes der mindestens einen geteilten Objekte die Anwendung in einem vorbestimmten Zeitraum verwendet hat; und
Senden (103) einer Berichtsantwortnachricht, die die Identifikationsinformation des mindestens einen geteilten Objekts an das Terminal trägt, um es dem Terminal zu ermöglichen, den erhaltenen Inhalt mit dem mindestens einen geteilten Objekt gemäß der Identifikationsinformation des mindestens einen geteilten Objekts zu teilen.

5. Verfahren zum Teilen von Inhalten nach Anspruch 4, wobei
Erhalten der Identifikationsinformation des mindestens einen geteilten Objekts durch den Positionsserver gemäß der Positionsinformation des Benutzers und der Identifikationsinformation des Benutzers:
Erhalten von Positionskoordinaten des Benutzers gemäß der Positionsinformation des Benutzers durch den Positionsserver; und
Erhalten einer Objektliste durch den Positionsserver gemäß der Identifikationsinformation des Benutzers und den Positionskoordinaten des Benutzers sowie einer gespeicherten Korrespondenzbeziehung zwischen Identifikationsinformation und Positionskoordinaten von Benutzern, wobei die Objektliste Identifikationsinformation von mindestens einem geteilten Objekt umfasst und die Entfernung zwischen einem der mindestens einen geteilten Objekte und dem Benutzer kleiner als eine vorbestimmte Entfernung ist.

6. Verfahren zum Teilen von Inhalten nach Anspruch 5, wobei
Erhalten (102, 204) der Positionskoordinaten des Benutzers gemäß der Positionsinformation des Benutzers durch den Positionsserver, umfasst:
Empfangen von Positionskoordinaten des Terminals, die über ein GPS-Modul als Positionskoordinaten des Benutzers erhalten wurden, durch den Positionsserver unter der Bedingung, dass die Positionsinformation des Benutzers die Positionskoordinaten des Terminals sind;
unter der Bedingung, dass die Positionsinformation des Benutzers Identifikationsinformation einer Basisstation ist, auf die das Terminal zugreift, Erhalten von Positionskoordinaten der Basisstation entsprechend der Identifikationsinformation der Basisstation gemäß einer gespeicherten Korrespondenzbeziehung zwischen Identifikationsinformation und Positionskoordinaten von Basisstationen durch den Positionsserver und Nehmen der erhaltenen Positionskoordinaten der Basisstation durch den Positionsserver als Positionskoordinaten des Benutzers; und
unter der Bedingung, dass die Positionsinformation des Benutzers Identifikationsinformation eines WLAN-Netzwerks ist, auf das das Terminal zugreift, Erhalten von Positionskoordinaten des WLAN-Netzwerks entsprechend der Identifikationsinformation des WLAN-Netzwerks gemäß einer gespeicherten Korrespondenzbeziehung zwischen Identifikationsinformation und Positionskoordinaten von WLAN-Netzwerken durch den Positionsserver und Nehmen der erhaltenen Positionskoordinaten des WLAN-Netzwerks als Positionskoordinaten des Benutzers durch den Positionsserver.

7. Verfahren zum Teilen von Inhalten nach Anspruch 5, wobei
nach dem Erhalten der Objektliste gemäß der Identifikationsinformation des Benutzers und den Positionskoordinaten des Benutzers sowie der gespeicherten Korrespondenzbeziehung zwischen der Identifikationsinformation des Benutzers und den Positionskoordinaten der Benutzer, wobei das Verfahren ferner umfasst:
für jedes der mindestens einen geteilten Objekte in der Objektliste, Erhalten der Nutzungszeit des geteilten Objekts durch den Positionsserver, wenn das geteilte Objekt in der Objektliste in letzter Zeit die Anwendung verwendet; und
unter der Bedingung, dass gemäß der erhaltenen Nutzungsdauer des mindestens einen geteilten Objekts bestimmt wird, dass es ein geteiltes Objekt gibt, das die Anwendung innerhalb eines vorgegebenen Zeitraums nicht genutzt hat, indem der Positionsserver Identifikationsinformation des geteilten Objekts, das die Anwendung nicht innerhalb eines vorgegebenen Zeitraums verwendet hat, aus der Objektliste entfernt.

8. Terminal, umfassend:
ein erstes Beschaffungsmodul (401) und ein zweites Beschaffungsmodul (402), die zum Erhalten von Positionsinformation eines Benutzers des Terminals und zum Senden einer Meldeanforderungsnachricht, die die Positionsinformation des Benutzers und die Identifikationsinformation des Benutzers enthält, an einen Positionsserver angepasst sind, um es dem Positionsserver zu ermöglichen, eine Objektliste gemäß der Positionsinformation des Benutzers und der Identifikationsinformation des Benutzers als Reaktion auf den Benutzer zu erhalten, der eine Anwendung verwendet, die angepasst ist, um auf dem Terminal laufende Inhalte zu erhalten, um einen zu teilenden Inhalt zu erhalten, wobei die Objektliste Identifikationsinformation von mindestens einem geteilten Objekt umfasst, mit dem der erhaltene Inhalt geteilt werden soll, das mindestens eine geteilten Objekt ein anderer Benutzer der Anwendung ist, der nicht der Benutzer ist, und ein Abstand zwischen dem Benutzer und einem der mindestens einen geteilten Objekte kleiner als ein vorbestimmter Abstand ist und jedes der mindestens einen geteilten Objekte die Anwendung in einem vorbestimmten Zeitraum verwendet hat;
das zweite Beschaffungsmodul (402), das ferner zum Empfangen einer vom Positionsserver gesendeten Berichtsantwortnachricht ausgelegt ist, wobei die Berichtsantwortnachricht die Objektliste trägt; und
ein Teilungsmodul (403), das zum Teilen des erhaltenen Inhalts mit dem mindestens einen geteilten Objekt gemäß der Identifikationsinformation des mindestens einen geteilten Objekts in der Objektliste angepasst ist.

9. Terminal nach Anspruch 8, wobei das erste Beschaffungsmodul umfasst:
eine Positionierungseinheit, die zum Positionieren des Terminals unter Verwendung eines GPS-Moduls im Terminal zum Erhalten von Positionskoordinaten des Terminals ausgelegt ist und die Positionskoordinaten des Terminals als Positionsinformation des Benutzers übernimmt; oder
eine erste Beschaffungseinheit, die geeignet ist, Identifikationsinformation einer Basisstation zu erhalten, auf die das Terminal zugreift, und die Identifikationsinformation der Basisstation als Positionsinformation des Benutzers zu nehmen; oder
eine zweite Beschaffungseinheit, die geeignet ist, Identifikationsinformation eines WLAN-Netzwerks zu erhalten, auf das das Terminal zugreift, und die Identifikationsinformation des WLAN-Netzwerks als Positionsinformation des Benutzers zu nehmen.

10. Positionsserver, umfassend:
ein Empfangsmodul (501), das zum Empfangen einer Meldeanforderungsnachricht angepasst ist, die von einem Terminal als Reaktion auf einen Benutzer gesendet wird, unter Verwendung einer Anwendung, die angepasst ist, um Inhalte zu erhalten, die auf dem Terminal ausgeführt werden, um einen zu teilenden Inhalt zu erhalten, wobei die Meldeanforderungsnachricht Positionsinformation des Benutzers und Identifikationsinformation des Benutzers trägt;
ein drittes Beschaffungsmodul (502), das zum Erhalten von Identifikationsinformation von mindestens einem geteilten Objekt, mit dem der erhaltene Inhalt gemäß der Positionsinformation des Benutzers und der Identifikationsinformation des Benutzers geteilt werden soll, ausgelegt ist, wobei mindestens ein geteiltes Objekt ein anderer Benutzer der Anwendung ist, der nicht der Benutzer ist, und eine Entfernung zwischen dem Benutzer und einem der mindestens einen geteilten Objekte kleiner als eine vorbestimmte Entfernung ist und jedes der mindestens einen geteilten Objekte die Anwendung in einer vorbestimmten Zeitspanne verwendet hat; und
ein Sendemodul (503), das zum Senden einer Meldeantwortnachricht mit der Identifikationsinformation des mindestens einen geteilten Objekts an das Terminal angepasst ist, um es dem Terminal zu ermöglichen, den erhaltenen Inhalt mit dem mindestens einen geteilten Objekt gemäß der Identifikationsinformation des mindestens einen geteilten Objekts zu teilen.

11. Positionsserver nach Anspruch 10, wobei das dritte Beschaffungsmodul umfasst:
eine dritte Beschaffungseinheit, die zum Erhalten von Positionskoordinaten des Benutzers gemäß der Positionsinformation des Benutzers geeignet ist; und
eine vierte Moduleinheit, die zum Erhalten einer Objektliste gemäß der Identifikationsinformation des Benutzers und den Positionskoordinaten des Benutzers sowie einer gespeicherten Korrespondenzbeziehung zwischen Identifikationsinformation und Positionskoordinaten von Benutzern ausgelegt ist, wobei die Objektliste Identifikationsinformation von mindestens einem geteilten Objekt umfasst und die Entfernung zwischen einem der mindestens einen geteilten Objekte und dem Benutzer kleiner als eine vorbestimmte Entfernung ist.

12. System zum Teilen von Inhalten, wobei das System das Terminal nach einem der Ansprüche 8 bis 9 und den Positionsserver nach einem der Ansprüche 10 bis 11 umfasst.

13. Ein oder mehrere Computerspeichermedien, umfassend computerausführbare Anweisungen, die, wenn sie von eine, Computer ausgeführt werden, den Computer veranlassen, ein Verfahren zum Teilen von Inhalten nach einem der Ansprüche 1-7 auszuführen.

## Revendications

1. Procédé de partage de contenus, ledit procédé comprenant :
l'obtention (201, 301), par un terminal, d'informations de position d'un utilisateur du terminal, et l'envoi (202), par le terminal, d'un message de demande de rapport comportant les informations de position de l'utilisateur et des informations d'identifiant de l'utilisateur à un serveur de positions pour permettre au serveur de positions d'obtenir une liste d'objets conformément aux informations de position de l'utilisateur et aux informations d'identifiant de l'utilisateur, en réponse à l'utilisateur utilisant une application adaptée à obtenir des contenus tournant sur le terminal pour obtenir un contenu destiné à être partagé, dans lequel la liste d'objets comprend des informations d'identifiant d'au moins un objet de partage avec lequel le contenu obtenu est destiné à être partagé, l'au moins un objet de partage est un autre utilisateur de l'application autre que l'utilisateur, et une distance entre l'utilisateur et l'un quelconque de l'au moins un objet de partage est inférieure à une distance prédéterminée et l'un quelconque de l'au moins un objet de partage a utilisé l'application sur une période de temps prédéterminée ;
la réception (206), par le terminal, d'un message de réponse de rapport envoyé par le serveur de positions, dans lequel le message de réponse de rapport comporte la liste d'objets ; et
le partage (207, 303), par le terminal, du contenu obtenu avec l'au moins un objet de partage conformément aux informations d'identifiant de l'au moins un objet de partage dans la liste d'objets.

2. Procédé de partage de contenus selon la revendication 1, dans lequel l'obtention (201, 301), par le terminal, des informations de position de l'utilisateur comprend :
le positionnement, par le terminal, du terminal en utilisant un module GPS dans le terminal pour obtenir des coordonnées de position du terminal, et la prise, par le terminal, des coordonnées de position du terminal comme les informations de position de l'utilisateur ; ou
l'obtention, par le terminal, d'informations d'identifiant d'une station de base à laquelle le terminal accède, et la prise, par le terminal, des informations d'identifiant de la station de base comme les informations de position de l'utilisateur ; ou
l'obtention, par le terminal, d'informations d'identifiant d'un réseau Wi-Fi auquel le terminal accède, et la prise, par le terminal, des informations d'identifiant du réseau Wi-Fi comme les informations de position de cet utilisateur.

3. Procédé de partage de contenus selon la revendication 1, dans lequel le partage (207, 303), par le terminal, du contenu obtenu avec l'au moins un objet de partage comprend :
l'affichage, par le terminal, des informations d'identifiant de l'au moins un objet de partage compris dans la liste d'objets pour l'utilisateur ;
en réponse à l'utilisateur, la sélection des informations d'identifiant d'un objet de partage destiné à être supprimé de la liste d'objets, la suppression, par le terminal, des informations d'identifiant de l'objet de partage sélectionné ;
en réponse à l'utilisateur, la sélection des informations d'identifiant d'un nouvel objet de partage dans une liste d'utilisateurs stockée sur le terminal, l'obtention, par le terminal, des informations d'identifiant du nouvel objet de partage et l'ajout, par le terminal, des informations d'identifiant du nouvel objet de partage dans la liste d'objets ; et
le partage, par le terminal, du contenu obtenu avec l'au moins un objet de partage conformément aux informations d'identifiant de l'au moins un objet de partage compris dans la liste d'objets.

4. Procédé de partage de contenus, ledit procédé comprenant :
la réception (101, 203), par un serveur de positions, d'un message de demande de rapport envoyé par un terminal en réponse à un utilisateur utilisant une application adaptée à obtenir des contenus tournant sur le terminal pour obtenir un contenu destiné à être partager, dans lequel le message de demande de rapport comporte des informations de position de l'utilisateur et des informations d'identifiant de l'utilisateur ;
l'obtention (102, 204), par le serveur de positions, d'informations d'identifiant d'au moins un objet de partage avec lequel le contenu obtenu est destiné à être partagé conformément aux informations de position de l'utilisateur et aux informations d'identifiant de l'utilisateur, dans lequel l'au moins un objet de partage est un autre utilisateur de l'application autre que l'utilisateur, et une distance entre l'utilisateur et l'un quelconque de l'au moins un objet de partage est inférieure à une distance prédéterminée et l'un quelconque de l'au moins un objet de partage a utilisé l'application sur une période de temps prédéterminée ; et
l'envoi (103) d'un message de réponse de rapport comportant les informations d'identifiant de l'au moins un objet de partage au terminal pour permettre au terminal de partager le contenu obtenu avec l'au moins un objet de partage conformément aux informations d'identifiant de l'au moins un objet de partage.

5. Procédé de partage de contenus selon la revendication 4, dans lequel l'obtention, par le serveur de positions, des informations d'identifiant de l'au moins un objet de partage conformément aux informations de position de l'utilisateur et aux informations d'identifiant de l'utilisateur comprend :
l'obtention, par le serveur de positions, de coordonnées de position de l'utilisateur conformément aux informations de position de l'utilisateur ; et
l'obtention, par le serveur de positions, d'une liste d'objets conformément aux informations d'identifiant de l'utilisateur et aux coordonnées de position de l'utilisateur ainsi qu'à une relation de correspondance stockée entre les informations d'identifiant et les coordonnées de position d'utilisateurs, dans lequel la liste d'objets comprend des informations d'identifiant d'au moins un objet de partage et la distance entre l'un quelconque de l'au moins un objet de partage et l'utilisateur est inférieure à une distance prédéterminée.

6. Procédé de partage de contenus selon la revendication 5, dans lequel l'obtention (102, 204), par le serveur de positions, des coordonnées de position de l'utilisateur conformément aux informations de position de l'utilisateur comprend :
la prise, par le serveur de positions, des coordonnées de position du terminal obtenues par l'intermédiaire d'un module GPS comme les coordonnées de position de l'utilisateur à la condition que les informations de position de l'utilisateur soient les coordonnées de position du terminal ;
à la condition que les informations de position de l'utilisateur soient des informations d'identifiant d'une station de base à laquelle le terminal accède, l'obtention, par le serveur de positions, de coordonnées de position de la station de base correspondant aux informations d'identifiant de la station de base conformément à une relation de correspondance stockée entre des informations d'identifiant et des coordonnées de position de stations de base, et la prise, par le serveur de positions, des coordonnées de position obtenues de la station de base comme les coordonnées de position de l'utilisateur ; et
à la condition que les informations de position de l'utilisateur soient des informations d'identifiant d'un réseau Wi-Fi auquel le terminal accède, l'obtention, par le serveur de positions, de coordonnées de position du réseau Wi-Fi correspondant aux informations d'identifiant du réseau Wi-Fi conformément à une relation de correspondance stockée entre des informations d'identifiant et des coordonnées de position de réseaux Wi-Fi, et la prise, par le serveur de positions, des coordonnées de position obtenues du réseau Wi-Fi comme les coordonnées de position de l'utilisateur.

7. Procédé de partage de contenus selon la revendication 5, dans lequel, après l'obtention de la liste d'objets conformément aux informations d'identifiant de l'utilisateur et aux coordonnées de position de l'utilisateur ainsi qu'à la relation de correspondance stockée entre les informations d'identifiant de l'utilisateur et les coordonnées de position d'utilisateurs, le procédé comprend en outre :
pour chacun de l'au moins un objet de partage dans la liste d'objets, l'obtention, par le serveur de positions, d'un temps d'utilisation de l'objet de partage lorsque l'objet de partage dans la liste d'objets a utilisé précédemment l'application ; et
à la condition qu'il est déterminé conformément au temps d'utilisation obtenu de l'au moins un objet de partage qu'il y a un objet de partage qui n'a pas utilisé l'application sur une période de temps prédéterminée, la suppression, par le serveur de positions, d'informations d'identifiant de l'objet de partage qui n'a pas utilisé l'application sur une période de temps prédéterminée de la liste d'objets.

8. Terminal comprenant :
un premier module d'obtention (401) et un deuxième module d'obtention (402), adaptés à obtenir des informations de position d'un utilisateur du terminal et envoyer un message de demande de rapport comportant les informations de position de l'utilisateur et des informations d'identifiant de l'utilisateur à un serveur de positions pour permettre au serveur de positions d'obtenir une liste d'objets conformément aux informations de position de l'utilisateur et aux informations d'identifiant de l'utilisateur, en réponse à l'utilisateur utilisant une application adaptée à obtenir des contenus tournant sur le terminal pour obtenir un contenu destiné à être partagé, dans lequel la liste d'objets comprend des informations d'identifiant d'au moins un objet de partage avec lequel le contenu obtenu est destiné à être partagé, l'au moins un objet de partage est un autre utilisateur de l'application autre que l'utilisateur, et une distance entre l'utilisateur et l'un quelconque de l'au moins un objet de partage est inférieure à une distance prédéterminée et l'un quelconque de l'au moins un objet de partage a utilisé l'application sur une période de temps prédéterminée ;
le deuxième module d'obtention (402), adapté en outre à recevoir un message de réponse de rapport envoyé par le serveur de positions, dans lequel le message de réponse de rapport comporte la liste d'objets ; et
un module de partage (403), adapté à partager le contenu obtenu avec l'au moins un objet de partage conformément aux informations d'identifiant de l'au moins un objet de partage dans la liste d'objets.

9. Terminal selon la revendication 8, dans lequel le premier module d'obtention comprend :
une unité de positionnement, adaptée à positionner le terminal en utilisant un module GPS dans le terminal pour obtenir des coordonnées de position du terminal, et prendre les coordonnées de position du terminal comme les informations de position de l'utilisateur ; ou
une première unité d'obtention, adaptée à obtenir des informations d'identifiant d'une station de base à laquelle le terminal accède, et prendre les informations d'identifiant de la station de base comme les informations de position de l'utilisateur ; ou
une deuxième unité d'obtention, adaptée à obtenir des informations d'identifiant d'un réseau Wi-Fi auquel le terminal accède, et prendre les informations d'identifiant du réseau Wi-Fi comme les informations de position de l'utilisateur.

10. Serveur de positions comprenant :
un module de réception (501), adapté à recevoir un message de demande de rapport envoyé par un terminal en réponse à un utilisateur utilisant une application adaptée à obtenir des contenus tournant sur le terminal pour obtenir un contenu destiné à être partagé, dans lequel le message de demande de rapport comporte des informations de position de l'utilisateur et des informations d'identifiant de l'utilisateur ;
un troisième module d'obtention (502), adapté à obtenir des informations d'identifiant d'au moins un objet de partage avec lequel le contenu obtenu est destiné à être partagé conformément aux informations de position de l'utilisateur et aux informations d'identifiant de l'utilisateur, dans lequel au moins un objet de partage est un autre utilisateur de l'application autre que l'utilisateur, et une distance entre l'utilisateur et l'un quelconque de l'au moins un objet de partage est inférieure à une distance prédéterminée et l'un quelconque de l'au moins un objet de partage a utilisé l'application sur une période de temps prédéterminée ; et
un module d'envoi (503), adapté à envoyer un message de réponse de rapport comportant les informations d'identifiant de l'au moins un objet de partage au terminal pour permettre au terminal de partager le contenu obtenu avec l'au moins un objet de partage conformément aux informations d'identifiant de l'au moins un objet de partage.

11. Serveur de positions selon la revendication 10, dans lequel le troisième module d'obtention comprend :
une troisième unité d'obtention, adaptée à obtenir des coordonnées de position de l'utilisateur conformément aux informations de position de l'utilisateur ; et
une quatrième unité de module, adaptée à obtenir une liste d'objets conformément aux informations d'identifiant de l'utilisateur et aux coordonnées de position de l'utilisateur ainsi qu'à une relation de correspondance stockée entre des informations d'identifiant et des coordonnées de position d'utilisateurs, dans lequel la liste d'objets comprend des informations d'identifiant d'au moins un objet de partage et la distance entre l'un quelconque de l'au moins un objet de partage et l'utilisateur est inférieure à une distance prédéterminée.

12. Système de partage de contenus, dans lequel le système comprend le terminal selon l'une quelconque des revendications 8 à 9 et le serveur de positions selon l'une quelconque des revendications 10 à 11.

13. Support ou supports de stockage informatiques comprenant des instructions exécutables par ordinateur qui, lorsqu'elles sont exécutées par un ordinateur, font en sorte que l'ordinateur mette en oeuvre un procédé de partage de contenus selon l'une quelconque des revendications 1 à 7.
